# EUROPÄISCHE PATENTSCHRIFT

(11) **EP 2 327 121 B1**
(45) Veröffentlichungstag und Bekanntmachung des Hinweises auf die Patenterteilung: **20.04.2016**
(21) Anmeldenummer: 09778419.3
(22) Anmeldetag: 09.09.2009
(51) Int. Cl.: H01R 12/83

(54) **AUFNAHMEEINHEIT FÜR EINEN SCHALTUNGSTRÄGER, ANSCHLUSSSYSTEM, ELEKTRISCHE MASCHINE MIT AUFNAHMEEINHEIT SOWIE KRAFTFAHRZEUG MIT DERARTIGER ELEKTRISCHER MASCHINE**
RECEIVING UNIT FOR A CIRCUIT CARRIER, CONNECTION SYSTEM, ELECTRIC MACHINE HAVING A RECEIVING UNIT AND MOTOR VEHICLES HAVING AN ELECTRIC MACHINE OF SAID KIND
UNITÉ DE RÉCEPTION POUR UN SUPPORT DE CIRCUITS, SYSTÈME DE RACCORDEMENT, MACHINE ÉLECTRIQUE AVEC UNITÉ DE RÉCEPTION AINSI QUE VÉHICULE À MOTEUR AVEC UNE MACHINE ÉLECTRIQUE DE CE TYPE

(30) Priorität: 27.09.2008 DE 102008049232
(43) Veröffentlichungstag der Anmeldung: 01.06.2011
(73) Patentinhaber: Bayerische Motoren Werke Aktiengesellschaft, 80809 München (DE)
(72) Erfinder: FRANKE, Torsten, 81479 München (DE)
(74) Vertreter: Mayer-Martin, Christian
(86) Internationale Anmeldenummer: PCT/EP2009/006530
(87) Internationale Veröffentlichungsnummer: WO 2010/034405

(56) Entgegenhaltungen:
- EP-A- 1 870 969
- US-A- 4 832 617
- US-A- 5 131 859

## Beschreibung

Die Erfindung betrifft eine Aufnahmeeinheit für einen Schaltungsträger, ein Anschlusssystem, eine elektrische Maschine mit einer solchen Aufnahmeeinheit sowie ein Kraftfahrzeug mit einer derartigen elektrischen Maschine.

Elektronische Steuerungen für Hybridantriebe werden aus Funktionsmodulen aufgebaut und umfassen z.B. eine Leistungselektronikendstufe, einen Zwischenkreiskondensator, eine Steuerplatine, ein Anschlussfeld, eine Regelungsbaugruppe, eine Kühlung und ein Gehäuse.

Zwischen den einzelnen Funktionsmodulen sind z.B. lösbare Verbindungen vorgesehen, die aufgrund des verhältnismäßig hohen Antriebsstroms entsprechend aufwändig ausgeführt sein müssen.

Für derartige Verbindungen werden derzeit Löt-, Schweiß- oder Schraubkontakte eingesetzt, um den Schaltungsträger mit den leistungselektronischen Bauelementen über Stromschienen mit dem Zwischenkreiskondensator und dem Anschlussfeld zu verbinden.

Durch die Verwendung von Stromschienen zwischen dem Schaltungsträger für die leistungselektronischen Bauelemente und dem Anschlussfeld werden Handhabungskräfte vom Schaltungsträger ferngehalten. Die metallurgischen Verbindungen zeichnen sich durch einen geringen Übergangswiderstand bei geringem Platzbedarf aus. Schraubkontakte sind kompakt und erlauben eine standardisierte Handhabung und Steckkontakte sind montagefreundlich. Eine solche Aufnahmeeinheit für einen Schaltungsträger ist aus dem Dokument US-A-4832617 bekannt.

Nachteilig an den metallurgischen Verbindungen ist deren schlechte Lösbarkeit und eingeschränkte Zuverlässigkeit. Schraubverbindungen sind mit hohen Montageaufwendungen und häufigen Montagefehlern verbunden und sind empfindlich gegen nachlassende Kontaktkräfte. Steckkontakte beanspruchen viel Platz und erfordern für Verbindungen mit hoher Strombelastung hohe Steckkräfte. Bekannte Druckkontaktsysteme benötigen viel Platz, um den Kraftschluss zu gewährleisten und sind anfällig gegen Montagefehler. Auf den Kontaktflächen befindliche Oxidschichten beeinträchtigen zudem die Kontaktierung der Schaltungsträger.

Aus der Computertechnik sind Stecksysteme bekannt, bei denen eine kontaktführende Platine eingelegt und anschließend durch Klappen und Verriegeln verspannt wird (z.B. bei Single-Inline-Memory-Modulen (SIMM)).

Die Verwendung derartiger Stecksysteme ist wegen der geringen erzielbaren Kontaktkräfte auf die Verbindung von Signalleitungen beschränkt. Die Kontaktflächen benötigen eine hohe Güte (Vergoldung), um eine Oxidation zu verhindern. Den gleichen Nachteil besitzt die für Single-Inline-Memory-Module genutzte Technologie, welche darüber hinaus zur Kontaktkraft proportionale Biegespannungen auf den Schaltungsträger überträgt und sich deshalb nur für Systeme mit geringen Kontaktkräften, d.h. geringen Strombelastungen, eignet.

Die **Aufgabe** der Erfindung besteht darin, die vorstehend genannten Nachteile zu vermeiden und insbesondere eine Aufnahmeeinheit zu schaffen, die eine effiziente Verbindungsmöglichkeit eines Schaltungsträgers bei hoher Strombelastungen ermöglicht.

Diese Aufgabe wird gemäß den Merkmalen der unabhängigen Patentansprüche gelöst. Weiterbildungen der Erfindung ergeben sich auch aus den abhängigen Ansprüchen.

Zur Lösung der Aufgabe wird eine Aufnahmeeinheit für einen Schaltungsträger gemäß Anspruch 1 angegeben.

Insbesondere ist es von Vorteil, dass beim Einführen in die Aufnahmeeinheit mittels des elektrischen Kontakts eine Oxidschicht aufgekratzt werden kann und somit eine elektrische Kontaktierung sichergestellt ist. Weiterhin ist es von Vorteil, dass in der Endstellung des Schaltungsträgers, also in einem eingeführten Zustand, der Schaltungsträger im wesentlichen verspannungsfrei kontaktiert ist.

Eine Weiterbildung ist es, dass die Aufnahmeeinheit eine Aussparung zur Aufnahme eines Teils des Schaltungsträgers aufweist.

Eine andere Weiterbildung ist es, dass der Schaltungsträger entlang einer Führung in die Aufnahmeeinheit einführbar ist.

Die Führung kann das schräge Einführen des Schaltungsträgers unterstützen.

Insbesondere ist es eine Weiterbildung, dass die Führung eine Führungsschiene und/oder eine Führung entlang eines Gehäuses umfasst.

Insbesondere kann das Gehäuse und/oder die Aufnahmeeinheit selbst derart ausgestaltet sein, dass das schräge Einführen des Schaltungsträgers in die Endstellung unterstützt wird. Dadurch kann auch das Aufbrechen einer womöglich an den Kontakten vorhandenen Oxidschicht effizient unterstützt werden.

Auch ist es eine Weiterbildung, dass die Aufnahmeeinheit mehrere elektrische Kontakte aufweist, die an gegenüberliegenden Seiten des Schaltungsträgers vorgesehen sind.

Beispielsweise können die Kontakte einander gegenüberstehend angeordnet sein. Auch können die Kontakte zumindest teilweise zueinander versetzt angeordnet sein.

Hierbei sei angemerkt, dass jeder Kontakt entsprechend einem durch ihn zu bzw. von dem Schaltungsträger fließenden Strom dimensioniert sein kann. Fließt beispielsweise durch den jeweiligen Kontakt ein hoher Strom, kann dieser entsprechen groß dimensioniert sein. Dient der Kontakt lediglich einer Signalübertragung im Niedervoltbereich, kann der Kontakt geringe Abmessungen aufweisen.

Ferner ist es eine Weiterbildung, dass die mehreren elektrischen Kontakte die auf den Schaltungsträger wirkenden Biegekräfte im wesentlichen kompensieren.

Im Rahmen einer zusätzlichen Weiterbildung ist auf der gegenüberliegenden Seite des mindestens einen Kontakts ein mechanischer Kontakt oder ein elektrischer Kontakt vorgesehen zum Ausgleich der auf den Schaltungsträger im eingeführten Zustand wirkenden Biegekräfte.

Insbesondere können in der Endstellung des Schaltungsträgers in der Aufnahmeeinheit gegenüberliegende elektrische oder mechanische Kontakte im wesentlichen auf einer Senkrechten zu einer Leiterbahnkontaktfläche liegen.

Hierbei sei angemerkt, dass die verspannungsfreie Lagerung des Schaltungsträgers auch mittels mechanischer Kontakte erreicht werden kann. Beispielsweise kann ein mechanischer Kontakt durch die Aufnahmeeinheit oder anhand eines Gehäuses vorgesehen sein.

Eine nächste Weiterbildung besteht darin, dass der Kontakt ein Federkontakt ist.

Hierbei sind unterschiedliche bzw. beliebige Variationen von Federkontakten - mechanischer und/oder elektrischer Art - möglich.

Eine Ausgestaltung ist es, dass die Aufnahmeeinheit eine Verriegelung aufweist.

Die Verriegelung dient insbesondere der Arretierung des Schaltungsträges in der Aufnahmeeinheit.

Eine alternative Ausführungsform besteht darin, dass der Schaltungsträger mittels einer Kühlflüssigkeit kühlbar ist.

Beispielsweise kann die Kühlflüssigkeit ein Kühlmittel oder eine Flüssigkeit der Umgebung sein.

Eine nächste Ausgestaltung ist es, dass der Schaltungsträger mindestens einen Anschluss zum Zuführen und/oder Abführen der Kühlflüssigkeit aufweist.

Insbesondere kann der Schaltungsträger in seinem Inneren eine mäanderförmige Leitungsstruktur mit einem Zufluss und einem Abfluss aufweisen, durch die die Kühlflüssigkeit fließen kann.

Auch ist es eine Ausgestaltung, dass mit Einführen des Schaltungsträgers in die Aufnahmeeinheit der mindestens eine Anschluss zum Zuführen und/oder Abführen des Kühlmittels verbindbar ist.

Eine Weiterbildung besteht darin, dass der mindestens eine elektrische Kontakt ein Kontakt einer Signalleitung und/oder eine Stromleitung ist.

Eine zusätzliche Ausgestaltung ist es, dass der mindestens eine elektrische Kontakt mit einer elektrischen Maschine verbunden ist.

Unter elektrischer Maschine wird insbesondere jede elektrische Maschine verstanden, die ein elektromagnetisches Wirkprinzip nutzt. Insbesondere kann die elektrische Maschine einen Elektromotor und/oder einen Generator umfassen.

Auch wird die vorstehende Aufgabe gelöst mittels eines Anschlusssystems umfassend die hierin beschriebene Aufnahmeeinheit sowie einen Schaltungsträger zum Einführen in die und/oder zur Aufnahme in der Aufnahmeeinheit.

Die vorstehend genannte Aufgabe wird auch gelöst durch eine elektrische Maschine umfassend mindestens eine Aufnahmeeinheit wie hierin beschrieben.

Auch wird die vorstehende Aufgabe gelöst anhand eines Kraftfahrzeug mit einer elektrischen Maschine gemäß der hier vorliegenden Beschreibung.

Ausführungsbeispiele der Erfindung werden nachfolgend anhand der Zeichnungen dargestellt und erläutert.

Es zeigen:
- Fig.1: eine Anordnung bzw. eine Aufnahmeeinheit zur Aufnahme eines Schaltungsträgers und zur Verbindung von Leiterbahnkontakten des Schaltungsträgers mit Steck-Druck-Kontakten eines Anschlussfelds;
- Fig.2: basierend auf der Darstellung gemäß Fig.1 den zwischen den Steck-Druck-Kontakten arretierten Schaltungsträger;
- Fig.3: eine Seitenansicht auf einen Schaltungsträger (Substrat mit Leiterbahnen) umfassend Anschlüsse für eine Gleichstromquelle sowie Phasenanschlüsse, wobei der Schaltungsträger weiterhin Kondensatoren, Transistoren, Dioden und Stromsensoren aufweist;
- Fig.4: ein Beispiel zur Kontaktierung zweier Schaltungsträger in einem Getriebegehäuse.

Der vorliegende Ansatz erlaubt ein Verbinden eines Schaltungsträgers insbesondere umfassend leistungselektronische Bauelemente über Steck-Druck-Kontakte mit einem Anschlussfeld. Dadurch wird die Anzahl der stromdurchflossenen Kontakte reduziert. Vorzugsweise nehmen die äußeren Elemente des Steck-Druck-Kontaktes die Handhabungskräfte auf und verhindern deren Übertragung auf den Schaltungsträger. Für Schaltungen mit großen Strömen kann der Schaltungsträger aus Keramik bestehen. Die Kontakte auf dem Schaltungsträger sind dabei vorzugsweise in der Technologie der Leiterbahnen des Schaltungsträgers ausgebildet, können jedoch durch zusätzlich aufgebrachte Kontaktwerkstoffe verstärkt werden.

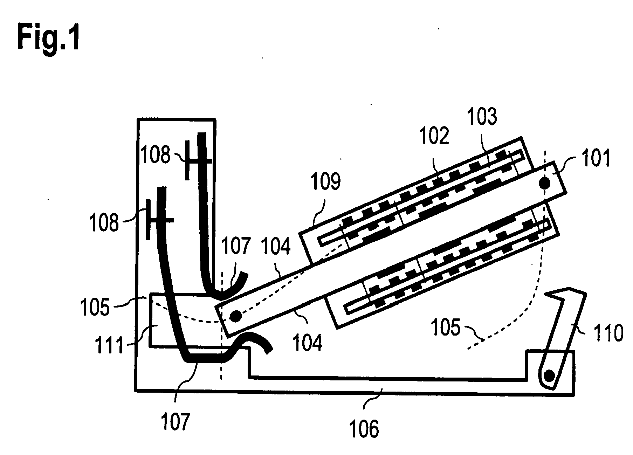

Fig.1 zeigt eine Anordnung bzw. eine Aufnahmeeinheit 106 zur Aufnahme eines Schaltungsträgers 101 und zur Verbindung von Leiterbahnkontakten 104 des Schaltungsträgers 101 mit Steck-Druck-Kontakten 107 eines Anschlussfelds 108.

Der Schaltungsträger 101 ist insbesondere ein leistungselektronischer Schaltungsträger umfassend Platinen 103 mit Bauelementen 102. Die elektrischen Komponenten 102 und 103 des Schaltungsträgers 101 können (wie der Schaltungsträger 101 selbst) mit einem elektrischen und/oder mechanischen Schutz 109 versehen sein.

Die Steck-Druck-Kontakte 107 sind derart ausgeführt, dass beim Einstecken des Schaltungsträgers 101 auf diesen anfänglich keine bzw. kaum eine Kontaktkraft wirkt. Die Kontaktkraft wirkt erst gegen Ende des Einsteckens des Schaltungsträgers 101 und ist bedingt durch ein Verkippen des Schaltungsträger 101 gegen die Steck-Druck-Kontakte 107. Vorzugsweise kann der Schaltungsträger 101 unter Aufbringung der Steckkraft noch vollends in eine Aussparung 111 eingeschoben werden.

Durch diesen Ansatz wird wirksam eine Beschädigung des Schaltungsträgers 101 (z.B. durch einen Kantenbruch) vermieden und die Steckkraft selbst wird reduziert.

Die abschließende Schiebebewegung des Schaltungsträgers 101 in die Aussparung 111 bewegt die Leiterbahnkontakte 104 zwischen den Steck-Druck-Kontakten 107 und ermöglicht somit, dass eine eventuell vorhandene Oxidschicht auf den Kontakten aufgekratzt und somit ein elektrischer Kontakt hergestellt wird.

Vorzugsweise wird der Schaltungsträger 101 entlang einer Führungsbahn 105 z.B. über eine Schiene gegenüber den Steck-Druck-Kontakten 107 geführt und in gesteckter Position abschließend gegenüber dem Kontaktsystem mittels einer Verriegelung 110 arretiert. Die Verriegelung 110 kann beispielsweise umfassen: Eine Schraube, eine Feder, einen Keil oder eine Klinke.

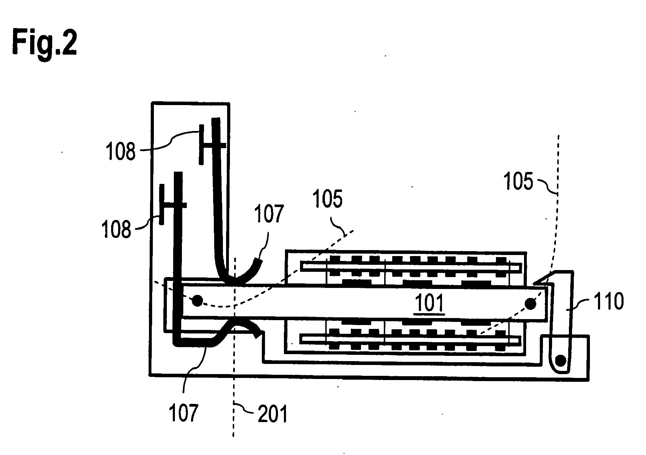

**Fig.2** zeigt basierend auf Fig.1 den zwischen den Steck-Druck-Kontakten 107 arretierten Schaltungsträger 101. Die Bezugszeichen entsprechend den Bezugszeichen gemäß Fig.1.

Der Querschnitt des Steck-Druck-Kontakts 107 und dessen Verankerung und/oder die Führung sind insbesondere derart bemessen, dass eine Steifigkeit des Kontakts 107 die für eine zuverlässige elektrische Verbindung notwendige Federcharakteristik ermöglicht, ohne dabei eine Stabilität des Schaltungsträgers 101 zu beeinträchtigen. Der Querschnitt des Kontakts 107 kann über seine Länge variieren.

In einer Ausführung kann der Kontakt 107 derart ausgebildet sein, dass sich mit zunehmendem Einschieben des Schaltungsträgers 101 die relativen Positionen zwischen oberem und unterem Kontaktelement derart gegeneinander verlagern, dass eine vorgegebene maximale Biegespannung des Schaltungsträgers 101 beim Einschieben in die Aufnahmeeinheit 106 nicht überschritten wird und im vollständig eingeschobenen Zustand des Schaltungsträgers 101 sich die Kraftachsen der Kontakte 107 im wesentlichen auf einer gemeinsamen Senkrechten 201 zu Vorder- und Rückseite des Schaltungsträgers 101 befinden. Dadurch wird die Biegebeanspruchung des Schaltungsträgers 101 durch das Kontaktsystem im wesentlichen neutralisiert.

Für eine hohe Stromtragfähigkeit sowie eine hohe Zuverlässigkeit der Steck-Druck-Kontaktierung können mehrere parallele Einzelkontakte bzw. Kontakte mit mehreren Lamellen verwendet werden. Für die verschiedenen Anschlüsse des Schaltungsträgers 101 (Plus, Minus, Motorphasen, Zwischenkreiskondensator, Filterinduktivität und/oder Filterkapazität, Bremschopper, etc.) können mehrere zueinander isolierte Steck-Druck-Kontakte vorgesehen sein.

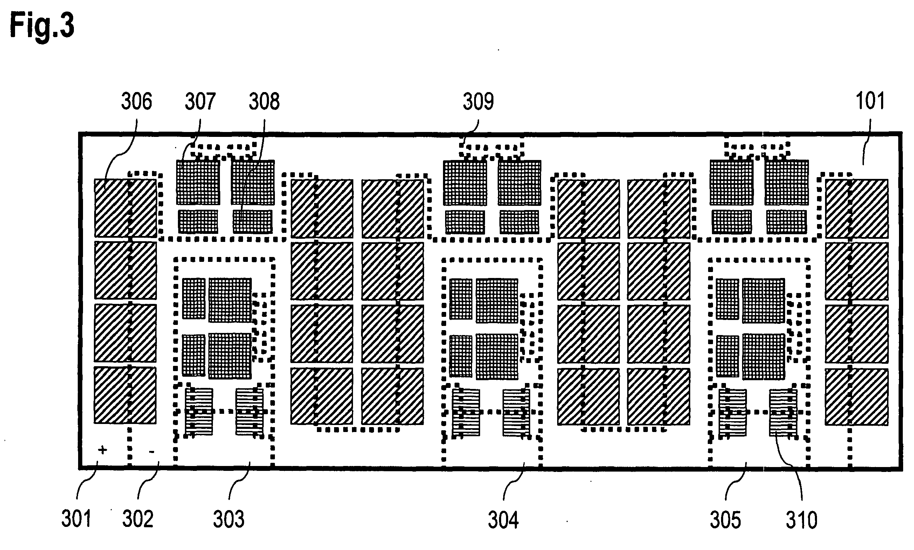

Fig.3 zeigt eine Seitenansicht auf einen Schaltungsträger 101 (Substrat mit Leiterbahnen) umfassend Anschlüsse 301, 302 für eine Gleichstromquelle und Phasenanschlüsse 303, 304 und 305. Der Schaltungsträger gemäß Fig.3 weist weiterhin Kondensatoren 306, Transistoren 307, Dioden 308 und Stromsensoren 310 auf. Ferner sind Ätzgräben 309 vorgesehen.

Vorteilhaft erfolgt der Kraftschluss des Kontaktsystems mit geringem Platzbedarf am Rand des Schaltungsträgers 101 über Vorder- und Rückseite des Schaltungsträgers 101. Für eine ausreichende elektrische Isolation zwischen den Anschlüssen, können die Kontaktflächen des Schaltungsträgers 101 gegenüber der Stirnseite zurückversetzt ausgeführt sein. Die elektrische Isolation der Steck-Druck-Kontakte 107 kann durch einen mechanischen Träger der Kontakte erreicht werden. Das Kontaktsystem kann dabei für einseitige, beidseitige bzw. gemischte oder asymmetrische Kontaktierung des Schaltungsträgers 101 ausgestaltet sein. Gegenüberliegende Vorder- und Rückseitenkontakte können gleichen oder unterschiedlichen Potentialen zugeordnet sein. Die Kontakte 107 können Leistungsanschlüsse und/oder Signalanschlüsse darstellen. Die Einzelkontakte können in Bezug auf ihre Kontaktkraft an die Strombelastung des jeweiligen Kontakts 107 angepasst werden. Hierbei ist es von Vorteil, wenn die Kontaktkraft des Kontakts 107 einer Seite bei möglichst kurzem Weg auch auf der Gegenseite einen entsprechenden Kraftschluss aufweist.

In einer weiteren Ausführung weist der Schaltungsträger 101 eine Versteifung (z.B. in Form einer zusätzlichen Platte) auf, die an der Unterseite oder zwischen den beiden Schaltungsflächen vorgesehen. Die zusätzliche Versteifung ermöglicht hohe Kontaktkräfte und damit Kontakte mit hoher Strombelastbarkeit.

Auch kann die Versteifung zur Kühlung des Schaltungsträgers 101 insbesondere der Kontakte wie der auf dem Schaltungsträger angeordneten Schaltung genutzt werden. Entsprechend kann das Kontaktsystem materialsparend dimensioniert werden.

Auch ist es eine Möglichkeit, ein Kühlmedium über Ober-, Seiten- oder Stirnflächen des Schaltungsträgers angebrachte Zu- und Abläufe (z.B. mit Belüftungsöffnungen, Fitting und Schläuchen etc.) zuzuführen bzw. abzuführen.

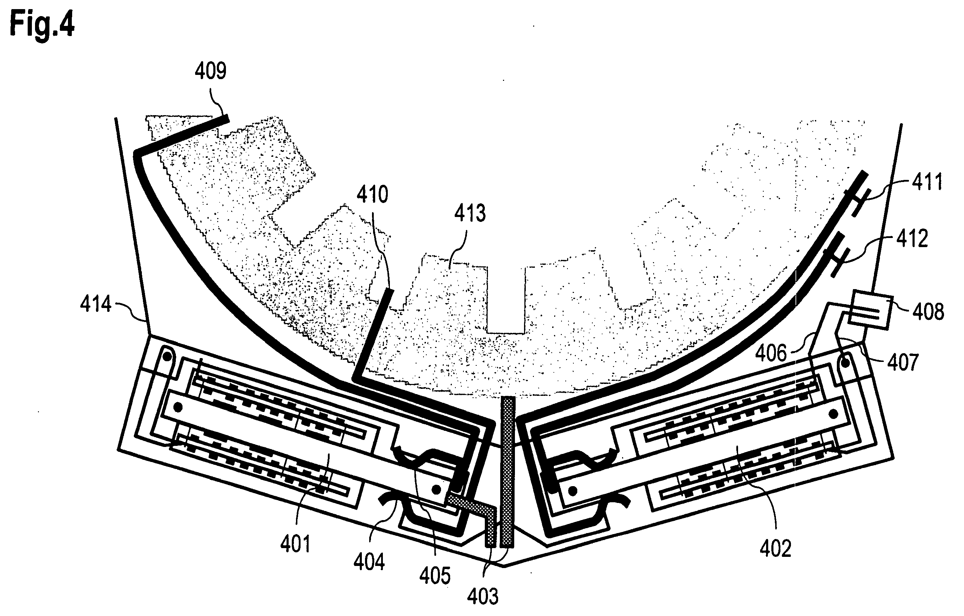

**Fig.4** zeigt ein Beispiel zur Kontaktierung zweier Schaltungsträger 401, 402 in einem Getriebegehäuse 414, wobei für den Schaltungsträger 401 ein Anschluss 403 zum Zuführen (bzw. zum Abführen) eines Kühlmittels oder einer Kühlflüssigkeit vorgesehen ist.

Eine andere Möglichkeit ist es, Zu- bzw. Abführung des Kühlmediums in das Steck-Druck-Kontakt-System zu integrieren (z.B. mittels O-Ring-Radial-Dichtungen). Dadurch können bei einer Montage des Schaltungsträgers 401 der Anschluss 403 sowie Kontakte 404, 405 in einem einzigen Arbeitsschritt verbunden werden.

Ferner ist es möglich, weitere Anschlüsse für Signalleitungen (z.B. CAN etc.) in das Steck-Druck-Kontakt-System zu integrieren. Dies kann z.B. in Form eines Steckers erreicht werden, der die Kippbewegung des zu steckenden Schaltungsträgers so ausnutzt, dass die Anschlüsse der Signalleitungen mit dem Steckvorgang kontaktiert werden.

Auch können weitere Anschlüsse für Leitungen, die verhältnismäßig geringe Kontaktkräfte erfordern (z.B. Signalleitungen) und/oder Kühlleitungen in einen Trägerrahmen bzw. in die Verriegelung des eingeschobenen Schaltungsträgers integriert sein. Dabei ist es auch möglich, dass eine verriegelnde Kraft an einem weiteren Schaltungsträger (z.B. Treiber- bzw. Regelungsplatine) angreift, der mit dem leistungselektronischen Schaltungsträger zumindest kraftschlüssig verbunden ist.

Diesbezüglich sind beispielhaft in Fig.4 Signalkontakte 406 und 407 gezeigt, die einem Steueranschluss 408 zugeführt werden.

Weiterhin kann der Schaltungsträger Teil eines integrierten elektrischen Antriebes mit einem Stator 413 sein und das Kontaktsystem kann zumindest teilweise ohne weitere Zwischenkontakte mit Phasenanschlüssen 409, 410 der elektrischen Maschine verbunden sein, so dass zumindest der für die Verbindung der Phasenanschlüsse genannte Teil der Anschlussfelder von Kontaktsystem und elektrischer Maschine entfallen kann. Entsprechend ist es auch möglich, dass eine Verbindung mittels Anschlussfeldern 411 und 412 hergestellt wird.

Weiterhin können der mechanische Träger des Anschlusssystems und der elektronischen Einrichtungen sowie die Anschlüsse für die Kühlung gemeinsam mit den mechanischen Teile des Motors (z.B. Statorblechpaket, Statorträger, Gehäuse etc.) ausgebildet sein.

Ferner kann der genannte integrierte elektrische Antrieb Teil eines Hybridgetriebes sein und beispielsweise mittels des Getriebeöls gekühlt werden.

Die vorgeschlagene Kontakttechnik für den Schaltungsträger bietet insbesondere den Vorteil einer lösbaren Verbindung zwischen dem Schaltungsträger als leistungselektronischer Komponente und dem Anschlussfeld. Weiterhin werden dem Schaltungsträger im wesentlichen keine Handhabungskräfte eingeprägt. Auch erfolgt ein kurzer sowie effizienter Kraftschluss. Der Ansatz ermöglicht ein hohes Maß an Zuverlässigkeit, geringen Materialaufwand, geringe Teileanzahl und einen reduzierten Montageaufwand.

Weiterhin ermöglicht der vorgestellte Ansatz eine Trennung von elektronischen und elektromechanischen Technologien und vereinfacht somit die Fertigung des Systems. Auch ist eine einfache Systemintegration durch die modulare und funktionale Bauweise möglich.

Schließlich erfordert das vorgestellte Anschlusssystem nur ein geringes Bauvolumen und unterstützt somit einen kostenoptimierten Einsatz.

### Bezugszeichenliste:

- 101: Schaltungsträger, insbesondere leistungselektronischer Schaltungsträger
- 102: Bauelement(e)
- 103: Platine, insbesondere Regelungsplatine oder Treiberplatine
- 104: Leiterbahnkontakt
- 105: Führungsbahn (für den Schaltungsträger)
- 106: Aufnahmeeinheit (z.B. Rahmen)
- 107: Kontakt, insbesondere Steck-Druck-Kontakt
- 108: Anschlussfeld
- 109: elektrischer und/oder mechanischer Schutz
- 110: Verriegelung
- 111: Aussparung

- 201: Linie für Kontaktkraft bei gestecktem Schaltungsträger 101

- 301: Anschluss (+)Pol
- 302: Anschluss (-) Pol
- 303: Phasenanschluss
- 304: Phasenanschluss
- 305: Phasenanschluss
- 306: Kondensator
- 307: Transistor
- 308: Diode
- 309: Ätzgraben
- 310: Stromsensor

- 401: Schaltungsträger
- 402: Schaltungsträger
- 403: Anschluss (zum Zuführen und/oder Abführen eines Kühlmittels oder einer Kühlflüssigkeit)
- 404: Kontakt
- 405: Kontakt
- 406: Signalkontakt

- 407: Signalkontakt
- 408: Steueranschluss
- 409: Phasenanschluss
- 410: Phasenanschluss
- 411: Anschlussfeder
- 412: Anschlussfeder
- 413: Stator
- 414: Getriebegehäuse

## Patentansprüche

1. Aufnahmeeinheit (106) für einen Schaltungsträger (101),
- bei der die Aufnahmeeinheit (106) mindestens einen elektrischen Kontakt (107) aufweist,
- wobei der Schaltungsträger (101) schräg zu einer Endstellung des Schaltungsträgers (101) in die Aufnahmeeinheit (106) einführbar ist;
- wobei die Aufnahmeeinheit (106) derart eingerichtet ist, dass in einem eingeführten Zustand des Schaltungsträgers (101) im wesentlichen über den mindestens einen elektrischen Kontakt (107) keine Biegekräfte auf den Schaltungsträger (101) wirken, und .

2. Aufnahmeeinheit nach Anspruch 1, bei der die Aufnahmeeinheit (106) eine Aussparung (111) zur Aufnahme eines Teils des Schaltungsträgers (101) aufweist.

3. Aufnahmeeinheit nach einem der vorhergehenden Ansprüche, bei der der Schaltungsträger (101) entlang einer Führung (105) in die Aufnahmeeinheit (106) einführbar ist.

4. Aufnahmeeinheit nach Anspruch 3, bei der die Führung (105) eine Führungsschiene und/oder eine Führung entlang eines Gehäuses oder der Aufnahmeeinheit (106) umfasst.

5. Aufnahmeeinheit nach einem der vorhergehenden Ansprüche, bei der die Aufnahmeeinheit (106) mehrere elektrische Kontakte (107) aufweist, die an gegenüberliegenden Seiten des Schaltungsträgers (101) vorgesehen sind.

6. Aufnahmeeinheit nach Anspruch 5, bei der die mehreren elektrischen Kontakte (107) die auf den Schaltungsträger wirkenden Biegekräfte im wesentlichen kompensieren.
bei der auf der gegenüberliegenden Seite des mindestens einen Kontakts (107) ein mechanischer Kontakt oder ein elektrischer Kontakt vorgesehen ist zum Ausgleich der auf den Schaltungsträger im eingeführten Zustand wirkenden Biegekräfte.

7. Aufnahmeeinheit nach einem der vorhergehenden Ansprüche, bei der der Kontakt (107) ein Federkontakt ist.

8. Aufnahmeeinheit nach einem der vorhergehenden Ansprüche, bei der die Aufnahmeeinheit (106) eine Verriegelung (110) aufweist.

9. Aufnahmeeinheit nach einem der vorhergehenden Ansprüche, bei der der Schaltungsträger (101) mittels einer Kühlflüssigkeit kühlbar ist.

10. Aufnahmeeinheit nach Anspruch 9, bei der der Schaltungsträger (401) mindestens einen Anschluss (403) zum Zuführen und/oder Abführen der Kühlflüssigkeit aufweist.

11. Aufnahmeeinheit nach Anspruch 10, bei der mit Einführen des Schaltungsträgers (401) in die Aufnahmeeinheit der mindestens eine Anschluss (403) zum Zuführen und/oder Abführen des Kühlmittels verbindbar ist.

12. Aufnahmeeinheit nach einem der vorhergehenden Ansprüche, bei der der mindestens eine elektrische Kontakt (107, 404, 405, 406, 407) ein Kontakt einer Signalleitung und/oder eine Stromleitung ist.

13. Aufnahmeeinheit nach einem der vorhergehenden Ansprüche, bei der der mindestens eine elektrische Kontakt (404, 405, 409, 410) mit einer elektrischen Maschine verbunden ist.

14. Anschlusssystem umfassend eine Aufnahmeeinheit (106) gemäß einem der Ansprüche 1 bis 13 sowie einen Schaltungsträger (101) zum Einführen in die und/oder zur Aufnahme in der Aufnahmeeinheit (106).

15. Elektrische Maschine umfassend mindestens eine Aufnahmeeinheit (106) nach einem der vorhergehenden Ansprüche 1 bis 13.

16. Kraftfahrzeug mit einer elektrischen Maschine gemäß Anspruch 15.

## Claims

1. A receiving unit (106) for a circuit carrier (101),
- wherein the receiving unit (106) has at least one electrical contact (107),
- wherein the circuit carrier (101) can be inserted into the receiving unit (106) at an angle to an end position of the circuit carrier (101);
- wherein the receiving unit (106) is configured such that when the circuit carrier (101) has been inserted, substantially no bending forces act on the circuit carrier (101) via the at least one electrical contact (107), and
- wherein provided on the opposite side of the at least one contact (107) is a mechanical contact or an electrical contact to compensate for the bending forces acting on the circuit carrier in the inserted state.

2. A receiving unit according to claim 1, wherein the receiving unit (106) has an opening (111) for receiving a part of the circuit carrier (101).

3. A receiving unit according to any one of the preceding claims, wherein the circuit carrier (101) can be inserted into the receiving unit (106) along a guide (105).

4. A receiving unit according to claim 3, wherein the guide (105) comprises a guide rail and/or a guide along a housing or along the receiving unit (106).

5. A receiving unit according to any one of the preceding claims, wherein the receiving unit (106) has a plurality of electrical contacts (107) which are provided on opposite sides of the circuit carrier (101).

6. A receiving unit according to claim 5, wherein the plurality of electrical contacts (107) substantially compensates for the bending forces acting on the circuit carrier.

7. A receiving unit according to any one of the preceding claims, wherein the contact (107) is a spring contact.

8. A receiving unit according to any one of the preceding claims, wherein the receiving unit (106) has a locking means (110).

9. A receiving unit according to any one of the preceding claims, wherein the circuit carrier (101) can be cooled by a coolant.

10. A receiving unit according to claim 9, wherein the circuit carrier (401) has at least one connection (403) for feeding and/or discharging the coolant.

11. A receiving unit according to claim 10, wherein the at least one connection (403) for feeding and/or discharging the coolant can be combined with the insertion of the circuit carrier (401) into the receiving unit.

12. A receiving unit according to any one of the preceding claims, wherein the at least one electrical contact (107, 404, 405, 406, 407) is a contact of a signal line and/or a power line.

13. A receiving unit according to any one of the preceding claims, wherein the at least one electrical contact (404, 405, 409, 410) is connected to an electrical machine.

14. A connection system comprising a receiving unit (106) according to any one of claims 1 to 13 and a circuit carrier (101) for insertion into and/or for receiving in the receiving unit (106).

15. An electrical machine comprising at least one receiving unit (106) according to any one of the preceding claims 1 to 13.

16. A motor vehicle having an electrical machine according to claim 15.

## Revendications

1. Unité de réception (106) pour un porte-circuit (101),
- comportant au moins un contact électrique (107),
- le porte-circuit (101) pouvant être introduit dans l'unité de réception (106) obliquement par rapport à une position d'extrémité du porte-circuit (101),
- l'unité de réception (106) étant réalisée de sorte que, dans l'état introduit du porte-circuit (101), essentiellement aucune force latérale n'agit sur le porte-circuit (101) par l'intermédiaire du contact électrique (107), et
sur le côté opposé du contact (107) étant prévu un contact mécanique ou un contact électrique pour compenser les forces latérales agissant sur le porte-circuit à l'état introduit.

2. Unité de réception conforme à la revendication 1,
comprenant un évidement (111) pour la réception d'une partie du porte-circuit (101).

3. Unité de réception conforme à l'une des revendications précédentes, dans laquelle le porte-circuit (101) peut être introduit dans l'unité de réception (106) le long d'un guidage (105).

4. Unité de réception conforme à la revendication 3,
dans laquelle le guidage (105) comprend un rail de guidage et/ou un guidage le long d'un boîtier ou de l'unité de réception (106).

5. Unité de réception conforme à l'une des revendications précédentes, comprenant plusieurs contacts électriques (107) qui sont situés sur des côtés opposés du porte-circuit (101).

6. Unité de réception conforme à la revendication 5,
dans laquelle les contacts électriques (107) compensent essentiellement les forces latérales agissant sur le porte-circuit.

7. Unité de réception conforme à l'une des revendications précédentes, dans laquelle le contact (107) est un contact élastique.

8. Unité de réception conforme à l'une des revendications précédentes, comprenant un verrouillage (110).

9. Unité de réception conforme à l'une des revendications précédentes, dans laquelle le porte-circuit (101) peut être refroidi au moyen d'un fluide de refroidissement.

10. Unité de réception conforme à la revendication 9,
dans laquelle le porte-circuit (401) comporte au moins un branchement (403) pour permettre l'entrée et/ou la sortie du fluide de refroidissement.

11. Unité de réception conforme à la revendication 10,
dans laquelle par l'introduction du porte-circuit (401) dans l'unité de réception, le branchement (403) peut être connecté pour permettre l'entrée et/ou la sortie du fluide de refroidissement.

12. Unité de réception conforme à l'une des revendications précédentes,
dans laquelle le contact électrique (107, 404, 405, 406, 407) est un contact d'une conduite de conduction de signal et/ou d'une conduction de conduction de courant.

13. Unité de réception conforme à l'une des revendications précédentes,
dans laquelle le contact électrique (404, 405, 409, 410) est relié à une machine électrique.

14. Système de connexion comprenant une unité de réception (106) conforme à l'une des revendications 1 à 13 ainsi qu'un porte-circuit (101) pour permettre son introduction et/ou sa réception dans l'unité de réception (106).

15. Machine électrique comprenant au moins une unité de réception (106) conforme à l'une des revendications précédentes 1 à 13.

16. Véhicule à combustion interne comprenant une machine électrique conforme à la revendication 15.
